# EUROPEAN PATENT APPLICATION

(11) **EP 4 592 895 A1**
(43) Date of publication of application: **30.07.2025**
(21) Application number: 24206273.5
(22) Date of filing: 11.10.2024
(51) Int. Cl.: G06N 3/045, G06N 20/20

(54) **LOAD BALANCING FOR MIXTURE OF EXPERTS MACHINE LEARNING**

(30) Priority: 29.01.2024 US 202418425542
(71) Applicant: Google LLC, Mountain View, CA 94043 (US)
(72) Inventor: TOMA, Horia Alexandru, Mountain View, 94043 (US); NAGARAJAN, Rahul, Mountain View, 94043 (US)
(74) Representative: Betten & Resch

(57) **Abstract**

Aspects of the disclosure are directed to improving load balancing for serving mixture of experts (MoE) machine learning models. Load balancing is improved by providing memory dies increased access to computing dies through a 2.5D configuration and/or an optical configuration. Load balancing is further improved through a synchronization mechanism that determines an optical split of batches of data across the computing die based on a received MoE request to process the batches of data. The 2.5D configuration and/or optical configuration as well as the synchronization mechanism can improve usage of the computing die and reduce the amount of memory dies required to serve the MoE models, resulting in less consumption of power and lower latencies and complexity in alignment associated with remotely accessing memory.

## Description

### BACKGROUND

A mixture of experts (MoE) model is a machine learning technique where various independently trained expert networks, e.g., neural networks, divide a problem space into homogeneous regions. Each expert network utilizes the same input. Depending on the input, one or more of the expert networks are activated to provide respective results. The respective results are combined as the final output for the MoE model. MoE models can require higher bandwidth for processing the input and combining results. Because it is unknown which expert networks will be activated until the receipt of the input, load balancing MoE models becomes highly difficult, at least because typically not all expert networks can be loaded in memory at once, and until the input is processed, it is unknown which network needs to be loaded into memory and activated.

### BRIEF SUMMARY

Aspects of the disclosure are directed to improving load balancing for serving mixture of experts (MoE) machine learning models. Load balancing is improved by providing memory dies increased access to computing dies through a 2.5D configuration and/or an optical configuration. Load balancing is further improved through a synchronization mechanism that determines an optical split of batches of data across the computing die based on a received MoE request to process the batches of data. The 2.5D configuration and/or optical configuration as well as the synchronization mechanism can improve usage of the computing die and reduce the amount of memory dies required to serve the MoE models, resulting in less consumption of power and lower latencies and complexity in alignment associated with remotely accessing memory.

One reason fewer memory dies may be used is because the 2.5D configuration and/or optical configuration allows for different experts to be loaded as-needed, instead of having the experts pre-loaded into fast memory, e.g., cache or on-chip memory. Only a subset of experts is accessed for any given input to an MoE model, and that subset is not known until the input is already being processed. Therefore, rather than loading all the experts in anticipation of their potential activation for a given input, aspects of the disclosure provide for more efficient loading and unloading of only the relevant experts for a given input.

An aspect of the disclosure provides for a method for serving mixture of expert (MoE) models including: receiving, by one or more processors, an MoE request including a plurality of batches of data and an MoE index; determining, by the one or more processors, a split for the batches of data across a plurality of computing units associated with activated experts based on the MoE index; distributing in parallel, by the one or more processors, the batches of data across the plurality of computing units based on the split; receiving, by the one or more processors, processed batches of data from the plurality of computing units; and aggregating, by the one or more processors, the processed batches of data to generate a response for the MoE request.

In an example, the method further includes outputting, by the one or more processors, the response for the MoE request.

In another example, the split includes the number of batches in the plurality of batches of data divided by the number of computing units in the plurality of computing units. In yet another example, the split is based on at least one of respective sizes of the batches of data or respective performances of the computing units.

In yet another example, the MoE index indicates which expert networks to activate when processing the MoE request. In yet another example, each processed batch of data includes a result from processing by the respective computing unit.

In yet another example, the one or more processors are implemented on the same chip package as the plurality of computing units. In yet another example, the one or more processors are optically connected to the plurality of computing units.

Another aspect of the disclosure provides for a system including: one or more processors; and one or more storage devices coupled to the one or more processors and storing instructions that, when executed by the one or more processors, cause the one or more processors to perform operations for serving mixture of expert (MoE) models, the operations including: receiving an MoE request including a plurality of batches of data and an MoE index; determining a split for the batches of data across a plurality of computing units associated with activated experts based on the MoE index; distributing in parallel the batches of data across the plurality of computing units based on the split; receiving processed batches of data from the plurality of computing units; and aggregating the processed batches of data to generate a response for the MoE request.

In an example, the operations further include outputting the response for the MoE request.

In another example, the split includes the number of batches in the plurality of batches of data divided by the number of computing units in the plurality of computing units. In yet another example, the split is based on at least one of respective sizes of the batches of data or respective performances of the computing units.

In yet another example, the MoE index indicates which expert networks to activate when processing the MoE request. In yet another example, each processed batch of data includes a result from processing by the respective computing unit.

In yet another example, the one or more processors are implemented on the same chip package as the plurality of computing units. In yet another example, the one or more processors are optically connected to the plurality of computing units.

Yet another aspect of the disclosure provides for a non-transitory computer readable medium for storing instructions that, when executed by one or more processors, cause the one or more processors to perform operations for serving mixture of expert (MoE) models, the operations including: receiving an MoE request including a plurality of batches of data and an MoE index; determining a split for the batches of data across a plurality of computing units associated with activated experts based on the MoE index; distributing in parallel the batches of data across the plurality of computing units based on the split; receiving processed batches of data from the plurality of computing units; and aggregating the processed batches of data to generate a response for the MoE request.

In an example, the split includes the number of batches in the plurality of batches of data divided by the number of computing units in the plurality of computing units. In another example, the split is based on at least one of respective sizes of the batches of data or respective performances of the computing units.

In yet another example, the one or more processors are implemented on the same chip package as the plurality of computing units; or the one or more processors are optically connected to the plurality of computing units.

### BRIEF DESCRIPTION OF THE DRAWINGS

FIG. 1 depicts a block diagram of an example MoE synchronizer according to aspects of the disclosure.
FIG. 2 depicts a block diagram of an MoE synchronization system according to aspects of the disclosure.
FIG. 3 depicts a block diagram of example 2.5D configurations where memory and computing dies are implemented in the same chip package according to aspects of the disclosure.
FIG. 4 depicts a block diagram of an example optical configuration where memory dies and computing dies may be implemented on different chip packages according to aspects of the disclosure.
FIG. 5 depicts a block diagram of an example environment for implementing a MoE synchronization system according to aspects of the disclosure.
FIG. 6 depicts a block diagram illustrating one or more MoE model architectures according to aspects of the disclosure.
FIG. 7 depicts a flow diagram of an example process for serving an MoE model to process batches of data according to aspects of the disclosure.

### DETAILED DESCRIPTION

The technology relates generally to optimizing load balancing for serving mixture of experts (MoE) machine learning models. Optimizing load balancing can include improving usage of high bandwidth and capacity memory (HBCM) and high performance computing (HPC) units. Example HPC units can include tensor processing units (TPUs), graphics processing units (GPUs), and/or central processing units (CPUs). The usage of the HBCM and HPC units is improved by providing direct access to HBCM for all HPC through a 2.5D configuration and/or an optical configuration. The 2.5D configuration and/or optical configurations allow for increasing efficient usage of HPC units, reducing the amount of HBCM needed for serving MoE models, reducing consumption of power, reducing latencies associated with remote access of memory, and/or reducing complexities with synchronization and alignment caused by the remote access of memory.

An example 2.5D configuration includes both memory and computing dies implemented in the same chip package. The memory dies and computing dies are connected to each other via 2.5D connections, such as interposers and/or embedded multi-die interconnect bridges (EMIBs). Each memory die can directly connect to 2, 3, or 4 computing dies depending on the configuration, as opposed to having a respective memory die for each computing die. Each memory die can include a synchronization mechanism to allow for providing the same data to all directly connected computing dies at a maximum rate.

An example optical configuration includes memory dies and computing dies implemented in different chip packages. The memory dies can form a memory bank connected to a plurality of computing dies via optical links. For example, optical links can include optical fibers that utilize micro-light emitting diode (LED)-based and/or laser-based technology for low power communication. Each memory die can be connected to each computing die via a corresponding optical link. As with the 2.5D configuration, each memory die in the memory bank can include the synchronization mechanism to allow for providing the same data to all computing dies at a maximum rate.

The synchronization mechanism can include the following steps for each of the memory dies. The memory die can receive a MoE request including a plurality of batches of data and an MoE index of the expert networks to be activated, e.g., extracted from the memory dies, to process the batches data. Based on the MoE request, the memory die can determine an optimal split of the batches across a plurality of computing dies. For example, the optimal split can be the number of batches divided by the number of computing dies when the batches have the same size and the computing dies are identical. As another example, the optimal split can be determined by a load balancing algorithm that utilizes a list of batches with respective sizes, a list of computing units with respective performances, and a list of memory units with respective capacities and bandwidth to generate an optimal assignment of batches to computing units. This example can be implemented when batches have different sizes and/or when there are differences between computing dies and memory dies, such as due to failures of one or more computing or memory die.

The memory die can distribute in parallel the MoE index and respective batches of data to each of the plurality of computing dies based on the optimal split. Each computing die can process its respective batch of data in parallel using activated expert networks based on the MoE index. When processing is complete, each computing die can send a termination signal to the memory die with a result. The memory die can aggregate the termination signals, which can aggregate the results to provide as a response for the MoE request. The memory die then can receive a subsequent MoE request including an additional plurality of batches of data and an additional MoE index.

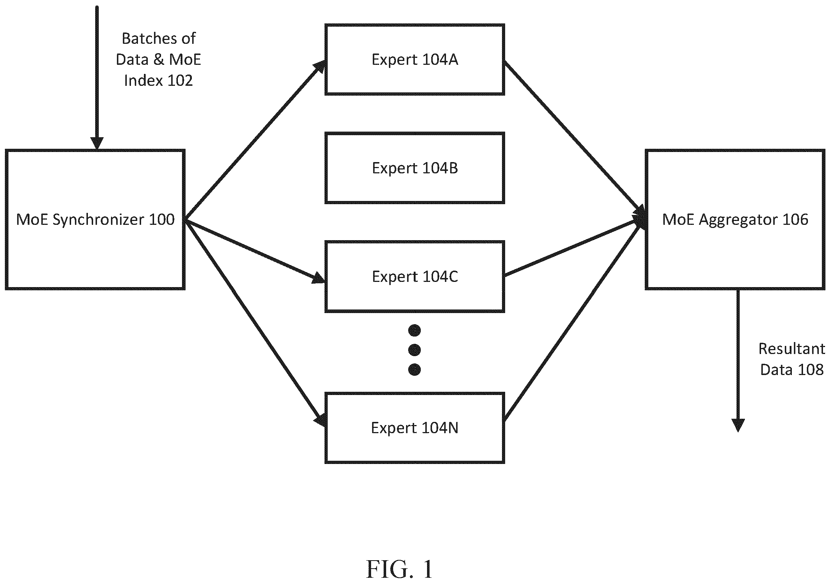

FIG. 1 depicts a block diagram of an example MoE synchronizer 100. The MoE synchronizer 100 can receive batches of data for processing and an MoE index 102. The MoE index 102 can indicate which experts 104, e.g., 104A-N, to activate for processing the batches of data. While four experts 104 are shown in FIG. 1, any number of experts 104 can be utilized as part of an MoE model. Based on at least the MoE index 102, the MoE synchronizer 100 can determine how to split the batches across the experts 104 to process the batches of data. The MoE synchronizer 100 can distribute respective batches of data to activated experts 104 based on the determined split. For example, as depicted in FIG. 1, the MoE index 102 indicates to activate experts 104A, 104B, and 104N. The MoE synchronizer 100 can determine how to split the batches of data for processing by experts 104A, 104B, and 104N and then distribute the batches of data to experts 104A, 104B, and 104N based on the determined split. The experts 104 can respectively process received batches of data in parallel and send the processed batches of data to an MoE aggregator 106. The MoE aggregator 106 can aggregate the processed batches of data to generate resultant data 108. The MoE aggregator 106 can output the resultant data 108, such as for responding to a MoE request or for further processing.

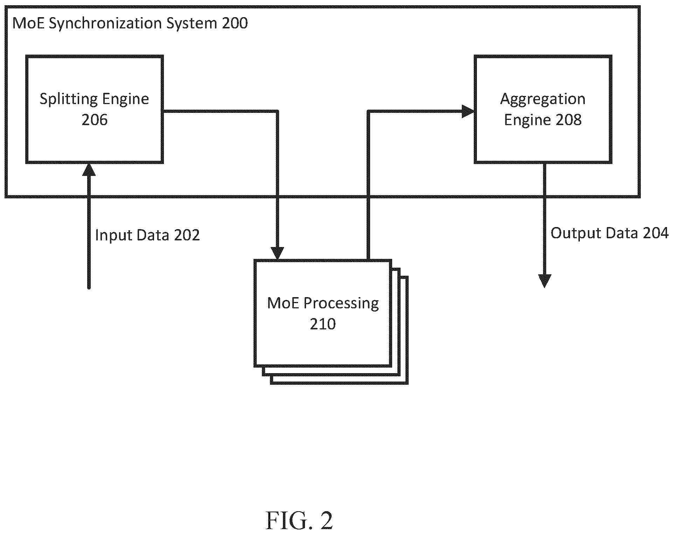

FIG. 2 depicts a block diagram of an MoE synchronization system 200 for improving processing of batches of data by MoE models. The MoE synchronization system 200 can be implemented on one or more computing devices in one or more locations.

The MoE synchronization system 200 can be configured to receive input data 202. For example, the MoE synchronization system 200 can receive the input data 202 as part of a call to an application programming interface (API) exposing the MoE synchronization system 200 to one or more computing devices. The input data 202 can also be provided to the MoE synchronization system 200 through a storage medium, such as remote storage connected to the one or more computing devices over a network. The input data 202 can further be provided as input through a user interface on a client computing device coupled to the MoE synchronization system 200.

The input data 202 can include MoE requests to process data. The MoE requests can include batches of data for processing and an MoE index to indicate which experts to activate to process the batches of data. The batches of data can be associated with various software applications, such as communication services, natural language processing, anomaly detection, and/or audio, video, and/or image processing. The MoE index can include a list of experts to activate for processing the batches of data in responding to the MoE request. The input data 202 can further include load balancing characteristics as part of or separate from the MoE requests. Example load balancing characteristics can include whether batch sizes are identical, whether computing dies associated with the experts are identical, a list of batches of data with respective sizes, a list of computing dies with respective performance features, and/or a list of respective memory dies with respective capacities and/or bandwidth. The load balancing characteristics can indicate how to split the batches of data across a plurality of computing dies associated with the activated experts.

From the input data 202, the MoE synchronization system 200 can be configured to output one or more results generated as output data 204. The output data 204 can include one or more responses to the MoE request. The responses can be associated with the various software applications, such as communication services, natural language processing, anomaly detection, and/or audio, video, and/or image processing. As an example, the MoE synchronization system 200 can be configured to send the output data 204 for display on a client or user display. As another example, the MoE synchronization system 200 can be configured to provide the output data 204 as a set of computer-readable instructions, such as one or more computer programs. The computer programs can be written in any type of programming language, and according to any programming paradigm, e.g., declarative, procedural, assembly, object-oriented, data-oriented, functional, or imperative. The computer programs can be written to perform one or more different functions and to operate within a computing environment, e.g., on a physical device, virtual machine, or across multiple devices. The computer programs can also implement functionality described herein, for example, as performed by a system, engine, module, or model. The MoE synchronization system 200 can further be configured to forward the output data 204 to one or more other devices configured for translating the output data into an executable program written in a computer programming language. The MoE synchronization system 200 can also be configured to send the output data 204 to a storage device for storage and later retrieval.

The MoE synchronization system 200 can include a splitting engine 206 and an aggregation engine 208. The splitting engine 206 and the aggregation engine 208 can be implemented as one or more computer programs, specially configured electronic circuitry, or any combination thereof.

The splitting engine 206 can be configured to split the batches of data across a plurality of computing dies associated with activated experts based on the MoE request and/or load balancing characteristics. For example, the splitting engine 206 can determine the batches of data have the same size and the computing dies are identical. In response, the splitting engine 206 can split the batches of data by dividing the number of computing dies associated with activated experts by the number of batches of data in the MoE request. As another example, the splitting engine 206 can determine the batches of data have different sizes, the computing dies are not identical. In response, the splitting engine 206 can split the batches of data based on respective sizes of the batches of data, respective performances of the computing dies associated with activated experts, and/or respective capacities and bandwidth of the memory dies associated with activated experts.

The splitting engine 206 can, in parallel, distribute the batches of data and MoE index to the plurality of computing dies associated with activated experts for MoE processing 210. MoE processing 210 may refer to activated experts respectively processing the batches of data in parallel to generate processed batches of data. The processed batches of data can be provided to the aggregation engine 208.

The aggregation engine 208 can be configured to aggregate the processed batches of data to generate resultant data for a response to the MoE request. For example, the aggregation engine 208 can sum the processed batches of data into a resultant batch of data. The aggregation engine 208 can output the resultant data to provide as a response to the MoE request or for further processing.

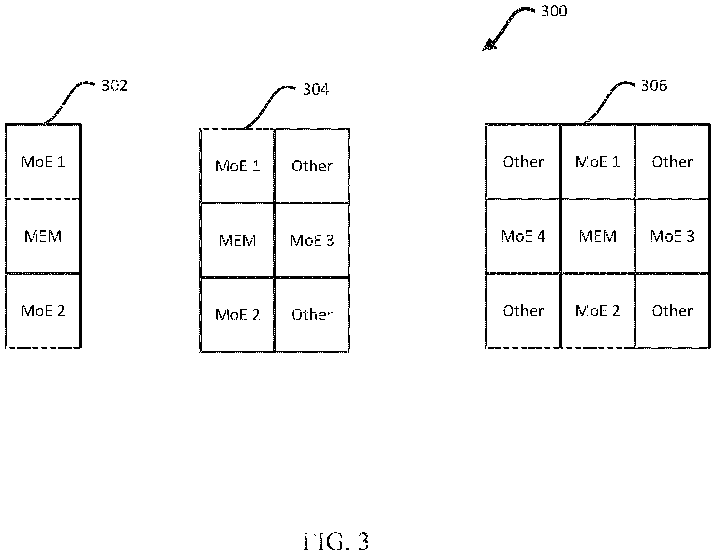

FIG. 3 depicts a block diagram of example 2.5D configurations 300 where memory and computing dies are implemented in the same chip package for MoE processing. The first configuration 302 includes a memory die connected to two computing dies. The second configuration 304 includes a memory die connected to three computing dies. The third configuration 306 includes a memory die connected to four computing dies. While three example configurations are shown in FIG. 3, these configurations 300 are not intended to be limiting. The memory die can include an MoE synchronization system, such as the MoE synchronization system 200 as depicted in FIG. 2, for providing batches of data to the computing dies.

The memory die and plurality of computing dies can be connected to each other via 2.5D connections, such as interposers and/or EMIBs. The memory die in each configuration can be directly connected to at least two computing dies, as opposed to multiple memory dies each directly connected to a respective computing die. This allows for saving space in the computing package, which can result in more memory and/or computing dies being able to fit in a single computing package to improve processing performance. For example, additional space, depicted as "other" in the configurations 300 in FIG. 3, can be used for a spare die, e.g., spare memory or computing die, and/or a die for ensuring the memory and/or computing die are working properly.

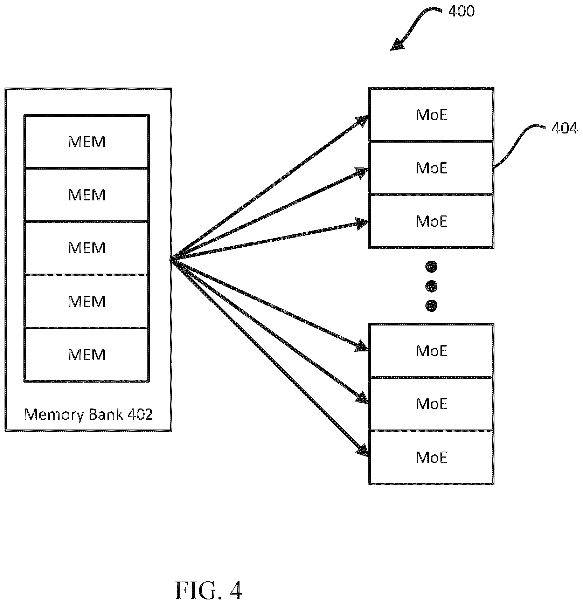

FIG. 4 depicts a block diagram of an example optical configuration 400 where memory dies and computing dies may be implemented on different chip packages for MoE processing. A plurality of memory dies can form a memory bank 402. The memory bank 402 can be optically connected to a plurality of computing dies 404, allowing for each memory die to be connected to each computing die of the plurality of computing dies 404. The memory bank 402 can include any number of memory die and the plurality of computing dies can include any number of computing dies.

The memory bank 402 and plurality of computing dies 404 can be connected via optical links, such as LED-based and/or laser-based optical fibers. Each memory die of the memory bank 402 can be connected to each computing die of the plurality 404 via a respective optical link. The memory bank 402 or each memory die can include an MoE synchronization system, such as the MoE synchronization system 200 as depicted in FIG. 2, for providing batches of data to the computing dies.

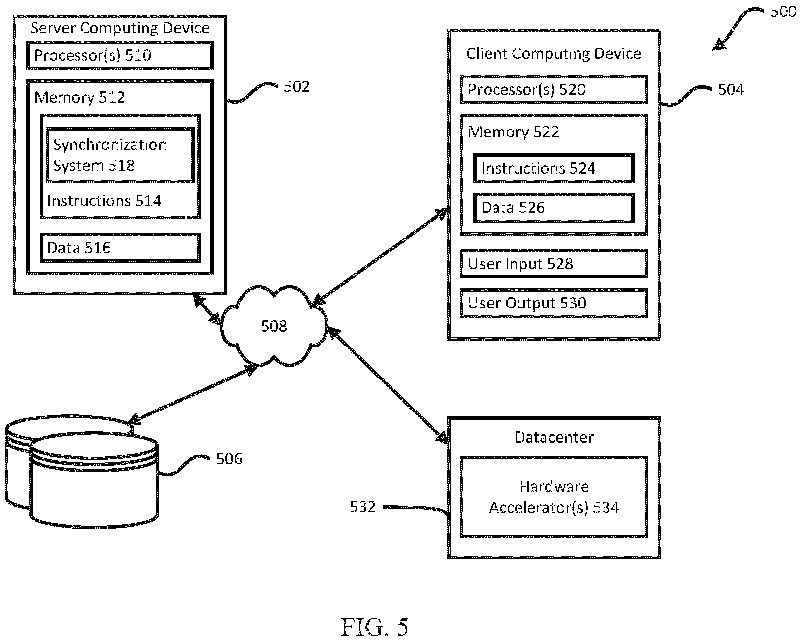

FIG. 5 depicts a block diagram of an example environment 500 for implementing a MoE synchronization system 518. The MoE synchronization system 518 can be implemented on one or more devices having one or more processors in one or more locations, such as in server computing device 502. Client computing device 504 and the server computing device 502 can be communicatively coupled to one or more storage devices 506 over a network 508. The storage devices 506 can be a combination of volatile and non-volatile memory and can be at the same or different physical locations than the computing devices 502, 504. For example, the storage devices 506 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 502 can include one or more processors 510 and memory 512. The memory 512 can store information accessible by the processors 510, including instructions 514 that can be executed by the processors 510. The memory 512 can also include data 516 that can be retrieved, manipulated, or stored by the processors 510. The memory 512 can be a type of transitory or non-transitory computer readable medium capable of storing information accessible by the processors 510, such as volatile and non-volatile memory. The processors 510 can include one or more central processing units (CPUs), graphics processing units (GPUs), field-programmable gate arrays (FPGAs), and/or application-specific integrated circuits (ASICs), such as tensor processing units (TPUs) and/or wafer scale engines (WSEs).

The instructions 514 can include one or more instructions that, when executed by the processors 510, cause the one or more processors 510 to perform actions defined by the instructions 514. The instructions 514 can be stored in object code format for direct processing by the processors 510, or in other formats including interpretable scripts or collections of independent source code modules that are interpreted on demand or compiled in advance. The instructions 514 can include instructions for implementing a MoE synchronization system 518, which can correspond to the MoE synchronization system 200 as depicted in FIG. 2. The MoE synchronization system 518 can be executed using the processors 510, and/or using other processors remotely located from the server computing device 502.

The data 516 can be retrieved, stored, or modified by the processors 510 in accordance with the instructions 514. The data 16 can be stored in computer registers, in a relational or non-relational database as a table having a plurality of different fields and records, or as JSON, YAML, proto, or XML documents. The data 516 can also be formatted in a computer-readable format such as, but not limited to, binary values, ASCII, or Unicode. Moreover, the data 516 can include information sufficient to identify relevant information, such as numbers, descriptive text, proprietary codes, pointers, references to data stored in other memories, including other network locations, or information that is used by a function to calculate relevant data.

The client computing device 504 can also be configured similarly to the server computing device 502, with one or more processors 520, memory 522, instructions 524, and data 526. The client computing device 504 can also include a user input 528 and a user output 530. The user input 528 can include any appropriate mechanism or technique for receiving input from a user, such as keyboard, mouse, mechanical actuators, soft actuators, touchscreens, microphones, and sensors.

The server computing device 502 can be configured to transmit data to the client computing device 504, and the client computing device 504 can be configured to display at least a portion of the received data on a display implemented as part of the user output 530. The user output 530 can also be used for displaying an interface between the client computing device 504 and the server computing device 502. The user output 530 can alternatively or additionally include one or more speakers, transducers or other audio outputs, a haptic interface or other tactile feedback that provides non-visual and non-audible information to the platform user of the client computing device 504.

Although FIG. 5 illustrates the processors 510, 520 and the memories 512, 522 as being within the respective computing devices 502, 504, components described herein can include multiple processors and memories that can operate in different physical locations and not within the same computing device. For example, some of the instructions 514, 524 and the data 516, 526 can be stored on a removable SD card and others within a read-only computer chip. Some or all of the instructions 514, 524 and data 516, 526 can be stored in a location physically remote from, yet still accessible by, the processors 510, 520. Similarly, the processors 510, 520 can include a collection of processors that can perform concurrent and/or sequential operation. The computing devices 502, 504 can each include one or more internal clocks providing timing information, which can be used for time measurement for operations and programs run by the computing devices 502, 504.

The server computing device 502 can be connected over the network 508 to a data center 532 housing any number of hardware accelerators 534. The data center 532 can be one of multiple data centers or other facilities in which various types of computing devices, such as hardware accelerators, are located. Computing resources housed in the data center 532 can be specified for deploying MoE models as described herein.

The server computing device 502 can be configured to receive requests to process data from the client computing device 504 on computing resources in the data center 532. For example, the environment 500 can be part of a computing platform configured to provide a variety of services to users, through various user interfaces and/or application programming interfaces (APIs) exposing the platform services. As an example, the variety of services can include natural language processing, anomaly detection, and/or audio, video, and/or image processing. The client computing device 504 can transmit input data as part of a query for a particular task. The MoE synchronization system 518 can receive the input data, and in response, generate output data including a response to the query for the particular task.

The server computing device 502 can maintain a variety of MoE models in accordance with different constraints available at the data center 532. For example, the server computing device 502 can maintain different families for deploying MoE models on various types of TPUs and/or GPUs housed in the data center 532 or otherwise available for processing.

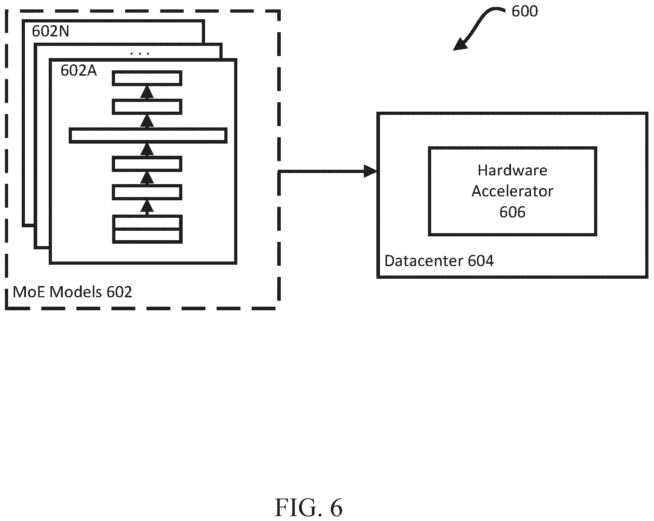

FIG. 6 depicts a block diagram 600 illustrating one or more MoE model architectures 602, more specifically 602A-N for each architecture, for deployment in a datacenter 604 housing a hardware accelerator 606 on which the deployed MoE models 602 will execute, such as for the variety of services as described herein. The hardware accelerator 606 can be any type of processor, such as a CPU, GPU, FPGA, or ASIC such as a TPU or WSE.

An architecture 602 of an MoE model can refer to characteristics defining the model, such as characteristics of layers for one or more experts of the model, how the layers process inputs, or how the layers interact with one another within an expert or among experts. The architecture 602 of the MoE model can also define types of operations performed within each layer within and/or across experts. One or more MoE model architectures 602 can be generated that can output results. Example MoE model architectures 402 can include Gaussian mixture of expert models, sparse-gated mixture of expert models, and/or hierarchical mixture of expert models.

Experts of the MoE models can be trained according to a variety of different learning techniques. Learning techniques for training the experts can include supervised learning, unsupervised learning, semi-supervised learning, and reinforcement learning techniques. For example, training data can include multiple training examples that can be received as input by one or more experts. The training examples can be labeled with a desired output for the expert when processing the labeled training examples. The training examples can be labeled with noisy labels that guarantee label differential privacy. The noisy labels and the expert output can be evaluated through a loss function to determine an error, which can be back propagated through the expert to update weights for the expert.

For example, a supervised learning technique can be applied to calculate an error between outputs, with a ground-truth label of a training example processed by the expert. Any of a variety of loss or error functions appropriate for the type of the task the expert is being trained for can be utilized, such as cross-entropy loss for classification tasks, or Poisson log loss or squared loss for regression tasks. The gradient of the error with respect to the different weights of the expert can be calculated, for example using a backpropagation algorithm, and the weights for the expert can be updated.

Referring back to FIG. 5, the devices 502, 504 and the data center 532 can be capable of direct and indirect communication over the network 508. For example, using a network socket, the client computing device 504 can connect to a service operating in the data center 532 through an Internet protocol. The devices 502, 504 can set up listening sockets that may accept an initiating connection for sending and receiving information. The network 508 can include various configurations and protocols including the Internet, World Wide Web, intranets, virtual private networks, wide area networks, local networks, and private networks using communication protocols proprietary to one or more companies. The network 508 can support a variety of short- and long-range connections. The short- and long-range connections may be made over different bandwidths, such as 2.402 GHz to 2.480 GHz, commonly associated with the Bluetooth^{®} standard, 2.4 GHz and 5 GHz, commonly associated with the Wi-Fi^{®} communication protocol; or with a variety of communication standards, such as the LTE^{®} standard for wireless broadband communication. The network 508, in addition or alternatively, can also support wired connections between the devices 502, 504 and the data center 532, including over various types of Ethernet connection.

Although a single server computing device 502, client computing device 3504, and data center 532 are shown in FIG. 5, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device connected to hardware accelerators configured for processing machine learning models, or any combination thereof.

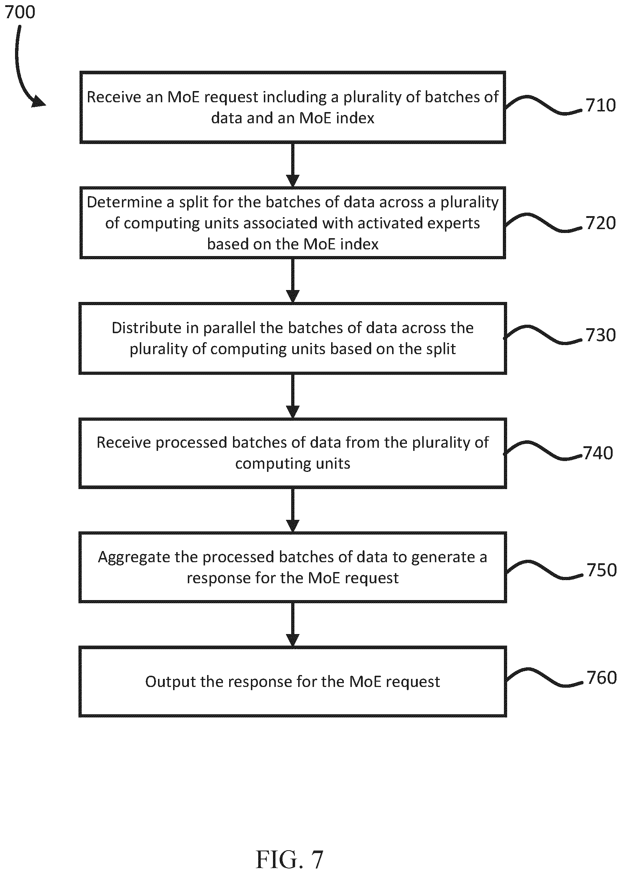

FIG. 7 depicts a flow diagram of an example process 700 for serving an MoE model to process batches of data. The example process can be performed on a system of one or more processors in one or more locations, such as the MoE synchronization system 200 as depicted in FIG. 2.

As shown in block 710, the MoE synchronization system 200 receives an MoE request including a plurality of batches of data and an MoE index. The batches of data can be associated with various software applications, such as communication services, natural language processing, anomaly detection, and/or audio, video, and/or image processing. The MoE index can include a list of experts to activate for processing the batches of data in responding to the MoE request.

As shown in block 720, the MoE synchronization system 200 determines a split for the batches of data across a plurality of computing units associated with activated experts based on the MoE index. The MoE synchronization system 200 can determine to split the batches of data by the number of batches of data divided by the number of computing units in the plurality when the batches of data have the same size and the computing units are identical. Alternatively, or additionally, the MoE synchronization system 200 can determine to split the batches of data based on load balancing characteristics, such as respective sizes of the batches of data and/or respective performances of the computing units when the batches of data do not have the same size and/or the computing units are not identical.

As shown in block 730, the MoE synchronization system 200 distributes in parallel the batches of data across the plurality of computing units based on the split. The plurality of computing units can process the batches of data to generate processed batches of data for providing back to the MoE synchronization system 200. The MoE synchronization system 200 can be implemented in a memory unit on the same chip package as the plurality of computing units or implemented in a memory bank and optically connected to the plurality of computing units.

As shown in block 740, the MoE synchronization system 200 receives the processed batches of data from the plurality of computing units. The processed batches of data can each include a result from a respective computing unit associated with an activated expert.

As shown in block 750, the MoE synchronization system 200 aggregates the processed batches of data to generate a response for the MoE request. The MoE synchronization system 200 can sum the processed batches of data into a resultant batch of data.

As shown in block 760, the MoE synchronization system 200 outputs the response for the MoE request.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" or "data processing system" refers to data processing hardware and encompasses various apparatus, devices, and machines for processing data, including programmable processors, computers, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method for serving mixture of expert, MoE, models comprising:
receiving, by one or more processors, an MoE request comprising a plurality of batches of data and an MoE index;
determining, by the one or more processors, a split for the batches of data across a plurality of computing units associated with activated experts based on the MoE index;
distributing in parallel, by the one or more processors, the batches of data across the plurality of computing units based on the split;
receiving, by the one or more processors, processed batches of data from the plurality of computing units; and
aggregating, by the one or more processors, the processed batches of data to generate a response for the MoE request.

2. The method of claim 1, further comprising outputting, by the one or more processors, the response for the MoE request.

3. The method of claim 1 or 2, wherein the split comprises the number of batches in the plurality of batches of data divided by the number of computing units in the plurality of computing units.

4. The method of one of claims 1 to 3,
wherein the split is based on at least one of respective sizes of the batches of data or respective performances of the computing units; and/or
wherein the MoE index indicates which expert networks to activate when processing the MoE request.

5. The method of one of claims 1 to 4, wherein each processed batch of data comprises a result from processing by the respective computing unit.

6. The method of one of claims 1 to 5
wherein the one or more processors are implemented on the same chip package as the plurality of computing units; or
wherein the one or more processors are optically connected to the plurality of computing units.

7. A system comprising:
one or more processors; and
one or more storage devices coupled to the one or more processors and storing instructions that, when executed by the one or more processors, cause the one or more processors to perform operations for serving mixture of expert, MoE, models, the operations comprising:
receiving an MoE request comprising a plurality of batches of data and an MoE index;
determining a split for the batches of data across a plurality of computing units associated with activated experts based on the MoE index;
distributing in parallel the batches of data across the plurality of computing units based on the split;
receiving processed batches of data from the plurality of computing units; and
aggregating the processed batches of data to generate a response for the MoE request.

8. The system of claim 7, wherein the operations further comprise outputting the response for the MoE request.

9. The system of claim 7 or 8,
wherein the split comprises the number of batches in the plurality of batches of data divided by the number of computing units in the plurality of computing units; and/or
wherein the split is based on at least one of respective sizes of the batches of data or respective performances of the computing units.

10. The system of one of claims 7 to 9, wherein the MoE index indicates which expert networks to activate when processing the MoE request.

11. The system of one of claims 7 to 10, wherein each processed batch of data comprises a result from processing by the respective computing unit.

12. The system of one of claims 7 to 11,
wherein the one or more processors are implemented on the same chip package as the plurality of computing units; or
wherein the one or more processors are optically connected to the plurality of computing units.

13. A non-transitory computer readable medium for storing instructions that, when executed by one or more processors, cause the one or more processors to perform operations for serving mixture of expert, MoE, models, the operations comprising:
receiving an MoE request comprising a plurality of batches of data and an MoE index;
determining a split for the batches of data across a plurality of computing units associated with activated experts based on the MoE index;
distributing in parallel the batches of data across the plurality of computing units based on the split;
receiving processed batches of data from the plurality of computing units; and
aggregating the processed batches of data to generate a response for the MoE request.

14. The non-transitory computer readable medium of claim 13,
wherein the split comprises the number of batches in the plurality of batches of data divided by the number of computing units in the plurality of computing units; and/or wherein the split is based on at least one of respective sizes of the batches of data or respective performances of the computing units.

15. The non-transitory computer readable medium of claim 13 or 14, wherein:
the one or more processors are implemented on the same chip package as the plurality of computing units; or
the one or more processors are optically connected to the plurality of computing units.
